# FASCICULE DE BREVET EUROPEEN

(11) **EP 1 243 479 B1**
(45) Date de publication et mention de la délivrance du brevet: **22.09.2004**
(21) Numéro de dépôt: 01400736.3
(22) Date de dépôt: 21.03.2001
(51) Int. Cl.: B60R 21/16

(54) **Dispositif et procédé de pliage d'un sac gonflable**
Vorrichtung und Verfahren zum Falten eines Gassacks
Device and method for folding an airbag

(43) Date de publication de la demande: 25.09.2002
(73) Titulaire: Dalphi Metal Espana, S.A., 28006 Madrid (ES)
(72) Inventeur: Pena Moradillos, Manuel, 63212 Vigo (ES)
(74) Mandataire: Moncheny, Michel

(56) Documents cités:
- DE-A- 19 714 174
- US-A- 6 115 998

## Description

La présente invention concerne un dispositif de pliage de sac gonflable pour dispositif de sécurité de véhicule automobile, conforme au préambule de la revendication 1.

On connaît dans l'état de la technique un certain nombre de machines de pliage de sacs gonflables ou «air-bags» qui réalisent, à grande vitesse et de façon automatisée, de telles opérations de pliage et la mise en place du sac équipé de son générateur de gaz dans un boîtier.

En particulier, on connaît des dispositifs dans lesquels on maintient le sac au niveau du générateur de gaz, qui définit la partie fixe du sac, et on compacte, au moyen de quatre pistons décalés de 90° et animés d'un mouvement radial, le sac confiné entre la table de support et une plaque supérieure espacée de celle-ci d'une hauteur prédéterminée. Un tel dispositif est par exemple divulgué dans le document US-A-6 115 998.

On a constaté qu'un pliage obtenu dans un tel confinement en hauteur ne donne pas une totale satisfaction, notamment lorsque les sacs pliés présentent des dissymétries importantes. En effet, dans le cas d'air-bags conducteurs qui sont généralement de forme circulaire et dont le générateur de gaz est disposé au centre, le pliage dans un espace confiné de hauteur prédéterminée conduit à une géométrie de pliage, et par conséquent à un comportement lors du déploiement du sac, relativement uniforme pour la totalité du sac. A l'inverse, dans le cas d'air-bags passagers ou latéraux, la forme du sac est rarement circulaire, et le générateur de gaz peut être nettement décentré par rapport à la surface formée par le sac étalé. Dans ces conditions, il n'est pas entièrement satisfaisant de prévoir un confinement dans lequel s'effectue le pliage.

Un but principal de l'invention est de proposer un dispositif de pliage de sac gonflable qui permette de réaliser un pliage automatisé et d'obtenir une configuration de pliage relativement uniforme quelle que soit la géométrie du sac, et quelle que soit la partie du sac considérée.

A cet effet, un dispositif de pliage de sac gonflable suivant l'invention est conforme à la revendication 1.

Grâce à cette disposition, les plis ne sont pas réalisés de façon naturelle du fait d'une paroi supérieure de confinement, mais forcés par des organes presseurs.

Le dispositif selon l'invention peut en outre être conforme à l'une ou plusieurs des revendications 2 à 18.

L'invention concerne aussi un procédé de pliage d'un sac gonflable pour dispositif de sécurité de véhicule automobile, conforme à la revendication 19.

Le procédé selon l'invention peut en outre être conforme à l'une ou plusieurs des revendications 20 à 25.

Un exemple de réalisation de l'invention va maintenant être décrit en regard des dessins annexés, sur lesquels :
- la Figure 1 est une vue schématique de dessus de la table de support d'un dispositif suivant l'invention, d'un sac gonflable prêt à être plié, dans trois positions successives, et d'un opérateur ;
- la Figure 2 est une vue schématique en élévation d'une partie d'un dispositif suivant l'invention, et du sac gonflable prêt à être plié ;
- les Figures 3 à 10 sont des vues analogues du dispositif dans des positions consécutives représentant des étapes respectives du procédé suivant l'invention ; et
- les Figures 11 à 13 sont des vues de dessus, à plus grande échelle, du sac durant trois phases du procédé de pliage, et des pinces de serrage des plis.

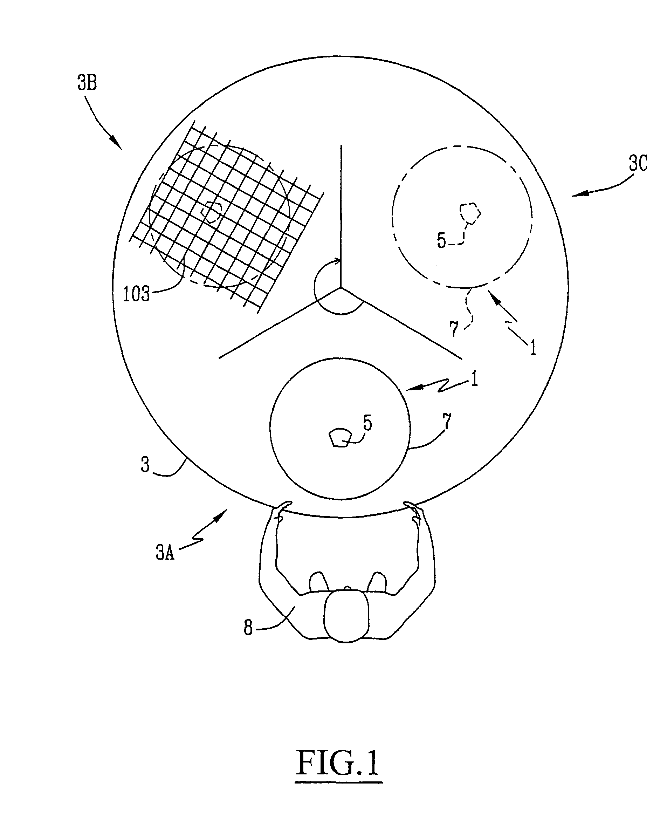

Sur la Figure 1, on a représenté, en vue de dessus, un sac gonflable 1 vide, étalé sur une table de support horizontale 3. Le sac 1 est par exemple de forme circulaire, et est équipé de son générateur de gaz 5, fixé à l'intérieur de l'enveloppe gonflable 7 du sac, par exemple dans une partie située en son centre. Le générateur 5 est éventuellement muni d'un diffuseur.

La table 3 est susceptible de rotation autour d'un axe vertical passant par son centre, et peut prendre trois positions angulaires par rapport à cet axe. La première position angulaire correspond à une première position du sac 1 (représentée en traits pleins). Cette première position donne un libre accès à la table 3 pour un opérateur 8, cet accès lui permettant de placer et de fixer le sac 1 sur la table 3. Il va de soi que cette opération peut être réalisée également par un robot. La position de libre accès est repérée par la référence 3A sur la Figure.

Outre la table 3, le dispositif de pliage objet de l'invention comprend un poste de chauffage 3B dans lequel sont disposés des moyens de chauffage du sac 103, par exemple des conducteurs électriques résistifs intégrés dans la table 3 en formant une grille. La deuxième position angulaire de la table 3 autour de son axe vertical correspond à la position du sac 1 dans le poste de chauffage 3B.

La troisième position angulaire de la table 3, repérée par la référence 3C, correspond à la position du sac dans laquelle s'effectuent les opérations de compactage qui vont être décrites en référence aux Figures suivantes. Le générateur 5 se situe alors au droit d'un organe de maintien qui sera décrit plus loin.

Le dispositif de pliage comprend des moyens de contrôle et de commande de la rotation de la table 3 autour de son axe vertical, permettant de placer la table 3 successivement dans ses trois positions, à savoir : sa position de libre accès 3A, sa position de chauffage du sac 3B, et sa position de compactage du sac 3C.

Le chauffage du sac préalablement au compactage ou pliage proprement dit permet d'éliminer, ou tout du moins de réduire, la tension de l'enveloppe 7 et de faciliter son compactage.

On a représenté ici une configuration du dispositif de pliage dans laquelle les opérations de charge ou fixation du sac, de chauffage et de pliage s'effectuent dans trois postes distincts, mais on peut prévoir de réaliser ces opérations en un seul poste fixe.

L'opération et le poste de chauffage du sac sont facultatifs et peuvent n'être mis en oeuvre que pour certains types de sacs.

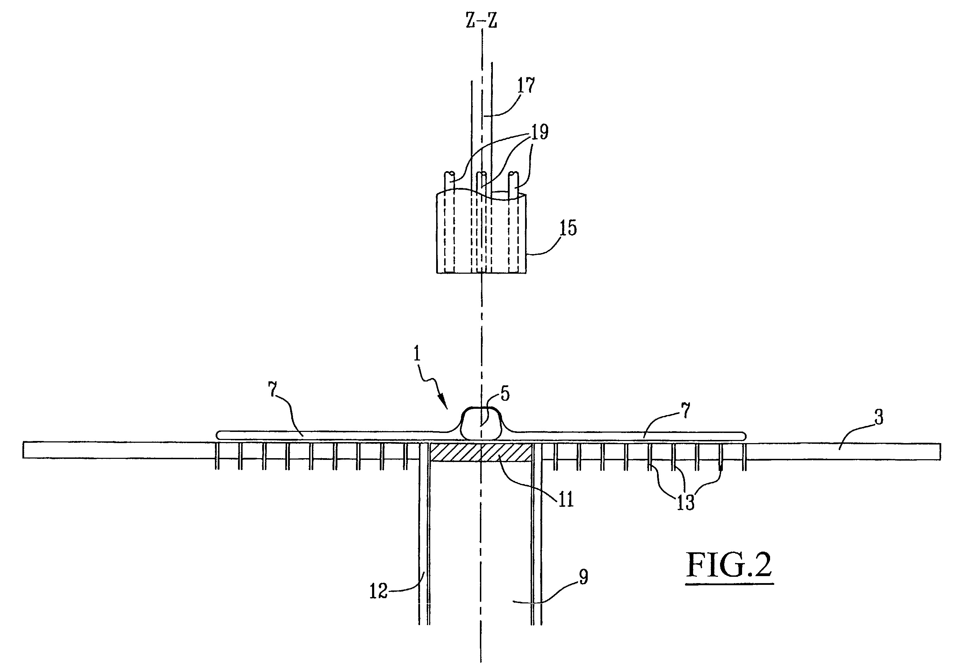

On se réfère maintenant à la Figure 2, qui représente, dans un plan vertical, une partie de la table de support 3 sur laquelle est étalé le sac gonflable vide 1.

La table 3 présente un piston cylindrique 9 de support et d'expulsion dont l'extrémité supérieure est conformée en plateau 11. Le piston 9 et le plateau 11 sont enveloppés coaxialement dans un cylindre creux vertical 12, mobile suivant l'axe vertical commun Z-Z, et de section transversale complémentaire d'une ouverture centrale de la table 3. Le plateau 11 et le cylindre creux 12 affleurent au niveau de la surface supérieure de la table 3. Le plateau 11 comporte une empreinte (non représentée) complémentaire du générateur 5, de façon qu'un opérateur qui place le générateur 5 sur le plateau 11 puisse l'y emboîter, l'empreinte assurant une pré-fixation du générateur 5 par rapport à la table 3. Le cylindre creux 12 définit des parois de confinement mobiles, et l'axe vertical commun Z-Z définit un axe central traversant l'empreinte prévue pour le générateur de gaz 5.

Dans la table 3, sont pratiqués une série de conduits 13 débouchant à la surface supérieure de la table 3, et constituant des conduits d'aspiration, qui permettent de créer localement un vide relatif entre l'enveloppe 7 du sac 1 et la table 3. Les conduits d'aspiration 13 sont reliés à une source de dépression (non représentée), telle qu'une pompe. Ils constituent des moyens d'aspiration tendant à plaquer localement l'enveloppe 7 du sac 1 sur la table 3, lorsqu'ils sont sollicités.

Le dispositif de pliage comprend en outre, au droit du générateur 5 et du piston d'expulsion 9, un piston de compression 15. Ce piston de compression 15 est constitué d'un cylindre sensiblement de même géométrie que le piston d'expulsion 9, déplaçable verticalement et coaxialement par rapport au piston d'expulsion 9.

A l'intérieur du piston de compression 15 sont montés, coulissants verticalement, des pistons secondaires de plus petites dimensions. Ces pistons secondaires sont constitués d'une part d'un piston central formant organe ou piston de maintien 17, et d'autre part d'une pluralité d'organes ou pistons de rétention 19 répartis autour du piston de maintien 17.

Le piston de maintien 17 est destiné à prendre appui sur la région de l'enveloppe 7 disposée au-dessus du générateur 5, tandis que les pistons de rétention 19 sont prévus pour prendre appui sur des régions périphériques de l'enveloppe 7, autour et à proximité du générateur 5.

Dans la configuration représentée à la Figure 2, le piston de compression 15, et solidairement les pistons secondaires 17, 19, sont dégagés du sac 1, c'est-à-dire dans une position située au-dessus de la table et sans contact avec le sac 1, de sorte qu'un opérateur peut manipuler le sac pour sa mise en place sur le plateau 11.

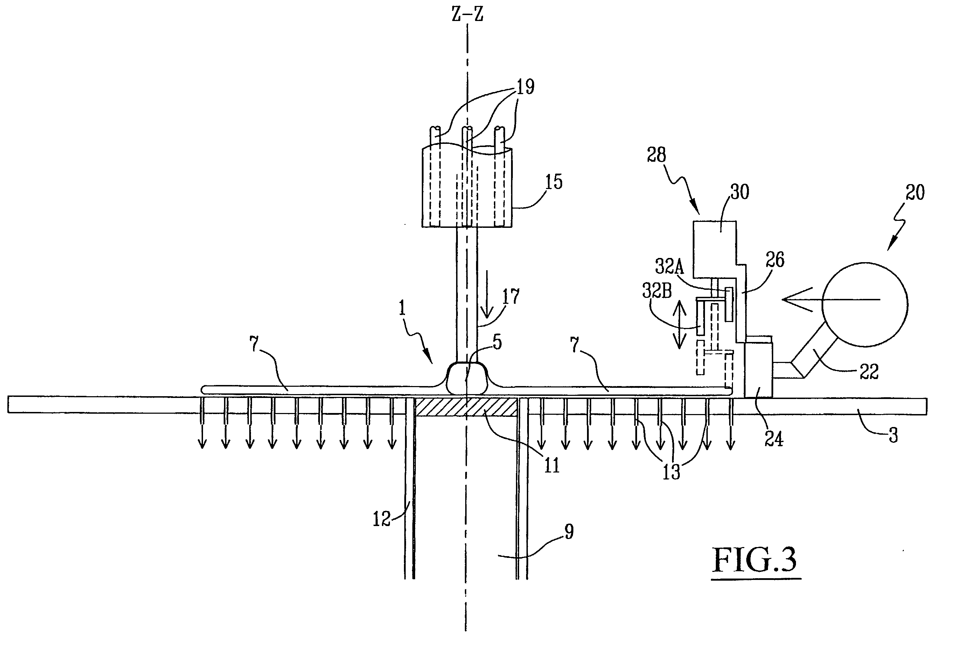

A la Figure 3, on a représenté le piston de maintien 17 en appui sur le générateur 5, la région du générateur 5 étant destinée à constituer une partie fixe du sac, centrée sur l'axe vertical Z-Z constituant l'axe central de compactage du sac 1.

Le dispositif de pliage comporte un automate schématisé sous la référence 20 piloté par des moyens électroniques programmables de contrôle et de commande non représentés. L'automate 20 comporte un bras 22 pourvu à une extrémité d'un organe de compactage 24, configuré en bloc présentant une face verticale tournée vers l'axe central et une face supérieure. L'organe de compactage 24 est de préférence fixé de façon amovible au bras 22, de sorte qu'il peut être remplacé par un autre de forme différente, en fonction du type de sac à plier. Il peut également être remplacé par un organe de saisie 25 destiné à prendre un boîtier, après l'opération de pliage, et le placer sur le sac plié.

L'organe de compactage 24 est surmonté d'un montant 26, lié à sa face supérieure, ledit montant 26 étant solidaire, par sa partie supérieure, d'un équipage mobile de pressage 28. L'équipage mobile de pressage 28 présente un corps 30 fixe par rapport au montant 26, et muni de deux pistons verticaux 32A, 32B constituant des organes presseurs. Ces pistons presseurs 32A, 32B sont susceptibles d'être animés d'un mouvement alternatif vertical par rapport au corps 30, entre une position haute dégagée du sac, et une position basse en contact avec celui-ci en le plaquant localement contre la table 3. Par rapport à l'axe central Z-Z, les deux pistons presseurs 32A, 32B sont légèrement décalés radialement, de façon que leurs axes respectifs de translation verticale soient situés au voisinage de la face verticale avant de l'organe de compactage 24, entre celle-ci et l'axe central Z-Z.

Le bras 22 de l'automate 20, et solidairement l'organe de compactage 24, sont susceptibles d'être animés d'un mouvement de translation horizontale radiale, c'est-à-dire depuis un bord périphérique du sac 1 vers l'axe central Z-Z, et inversement. L'équipage mobile de pressage 28 est essentiellement lié en translation radiale à l'organe de compactage 24, du fait de la liaison du montant 26 avec la face supérieure de l'organe de compactage 24. L'équipage mobile de pressage 28 présente cependant une liberté de translation radiale par rapport à l'organe de compactage 24, sur une course faible devant la course radiale de l'organe de compactage 24. Ce mouvement est obtenu au moyen d'une liaison glissière matérialisée par un rail de guidage 34, formé sur la face supérieure de l'organe de compactage 24, et coopérant avec une partie complémentaire de l'extrémité inférieure du montant 26.

Le bras 22, et solidairement l'organe de compactage 24, sont d'autre part susceptibles d'un mouvement de rotation autour de l'axe central Z-Z, de façon à pouvoir réaliser des opérations de compactage radial à partir de différents points répartis sur la périphérie de l'enveloppe 7.

Les différents mouvements relatifs des éléments du dispositif de pliage tels que décrits précédemment seront mieux compris à la lecture de la description qui va être faite des opérations du procédé de pliage, en référence aux Figures 2 à 10.

En se reportant à nouveau à la Figure 2, on note que le dispositif de pliage partiellement représenté offre, pour un opérateur, un libre accès à la partie centrale de la table 3, de façon que l'opérateur puisse y placer le sac à plier, ainsi que cela a été représenté. On pourrait prévoir également que cette opération s'effectue de façon automatisée.

A partir de l'étape représentée à la Figure 3 , le pliage s'effectue de façon automatisée, en commençant par le maintien du générateur 5 au moyen du piston de maintien 17. Pour cela, le piston 17 est actionné en descente et amené en pression sur la région de l'enveloppe 7 disposée au-dessus du générateur 5, le piston d'expulsion 9 et le plateau 11 solidaire étant maintenus fixes par rapport à la table 3.

On crée une dépression entre la table de support 3 et l'enveloppe 7 du sac en générant une aspiration d'air par les conduits d'aspiration 13 (le courant d'aspiration est symbolisé par les flèches verticales descendantes). L'aspiration est créée dans les régions de la table 3 couvertes par les parties d'enveloppe 7 étalées à plat.

Ainsi que cela a été représenté par les flèches associées à l'automate 20, le bras 22 et solidairement l'organe de compactage 24 sont actionnés en translation radiale depuis un point périphérique de l'enveloppe 7 vers l'axe central Z-Z, et simultanément, les pistons presseurs 32A, 32B sont actionnés dans un mouvement alternatif de montée et de descente. Dans un premier temps, les pistons presseurs 32A, 32B sont actionnés verticalement vers le bas dans un mouvement commun, puis sont animés de mouvements alternatifs, tels que les phases d'appui d'un piston presseur 32A, 32B par rapport à l'autre sur la partie de sac en cours de compactage sont décalées dans le temps. De ce fait, il existe un mouvement de translation relative entre les deux pistons presseurs 32A, 32B.

On notera que dans l'exemple de réalisation représenté, on utilise un seul bras 22 et un seul organe de compactage 24 associés à un automate 20, lequel réalise des opérations de compactage élémentaires successives à partir de différents points périphériques de l'enveloppe 7.

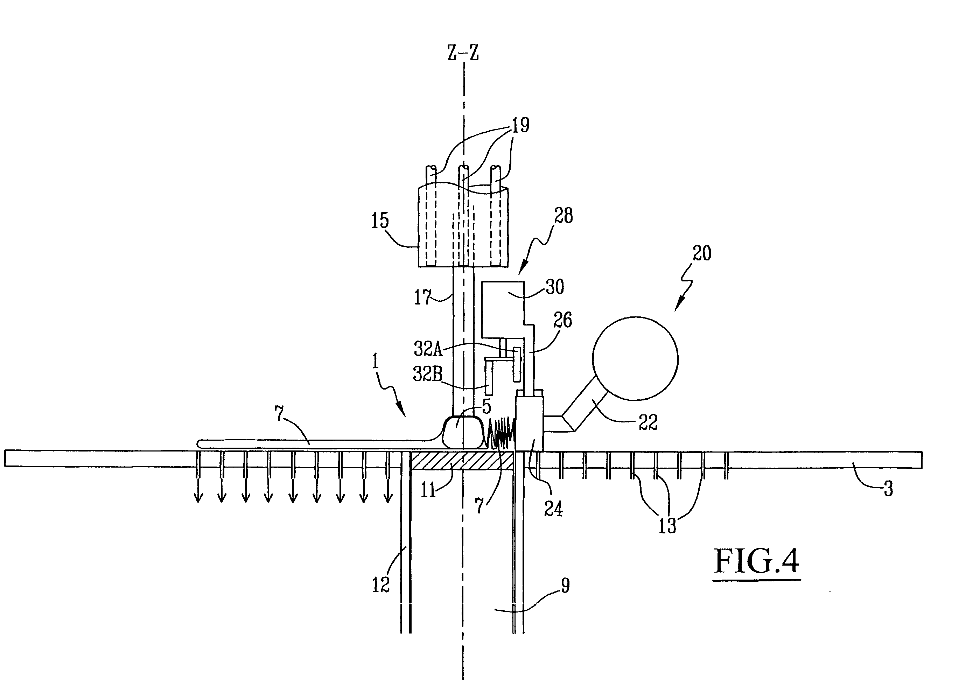

A la Figure 4, on a schématisé la configuration du dispositif et du sac à la fin d'une première opération élémentaire de compactage. L'organe de compactage 24 est alors en fin de course radiale. Dans cette position, la face verticale avant de l'organe de compactage 24 est située légèrement radialement à l'intérieur du bord périphérique du plateau 11, et une partie de l'enveloppe 7 se trouve alors compactée radialement dans l'encombrement défini par le plateau 11.

On notera que, sur la fin de la phase élémentaire de compactage, l'équipage mobile de pressage 28 subit un léger recul par rapport au mouvement du bras 22, ce mouvement de recul étant obtenu par coulissement du montant 26 sur le rail 34. Lors de la fin de course de l'organe de compactage 24, les pistons presseurs 32A, 32B sont également désactivés et dégagés verticalement vers le haut dans un mouvement commun.

On note également que l'aspiration d'air est interrompue dans les conduits d'aspiration 13 dégagés par la partie d'enveloppe 7, au fur et à mesure de son compactage. On comprend en effet que l'aspiration en des régions de la table 3 découvertes est inopérante et sans objet.

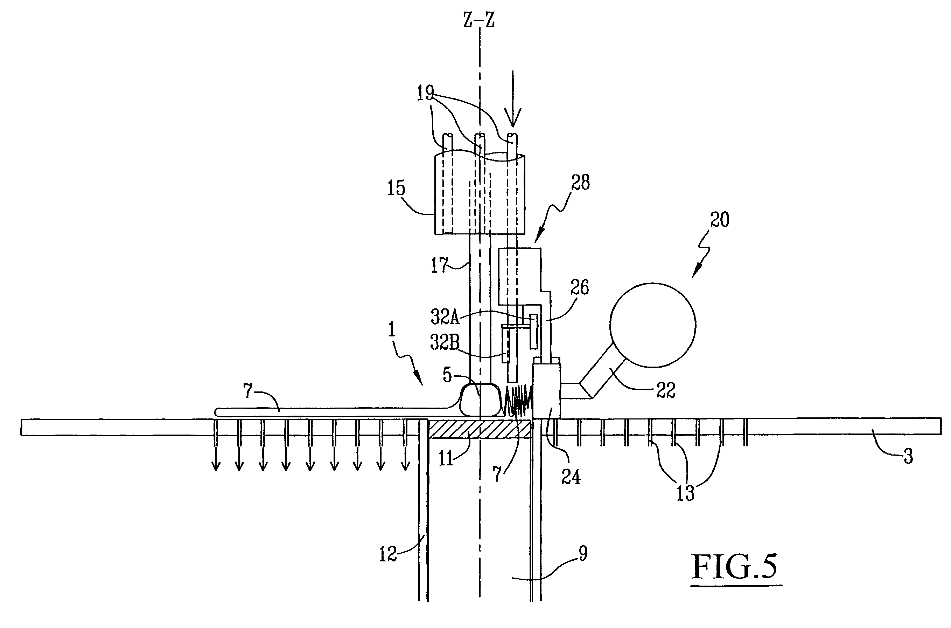

Sur la Figure 5, on a représenté l'étape suivante du procédé de pliage, dans lequel un piston de rétention 19 situé au droit de la partie de l'enveloppe compactée est actionné en descente, de façon à venir prendre appui sur la partie pliée du sac, et à figer le pliage réalisé par la phase ou opération élémentaire de compactage. L'appui de l'organe de rétention 19 est exercé en un point (ou une région) radialement extérieur(e) par rapport à la partie fixe constituée par le générateur 5, ce point (ou région) d'appui définissant une partie de rétention.

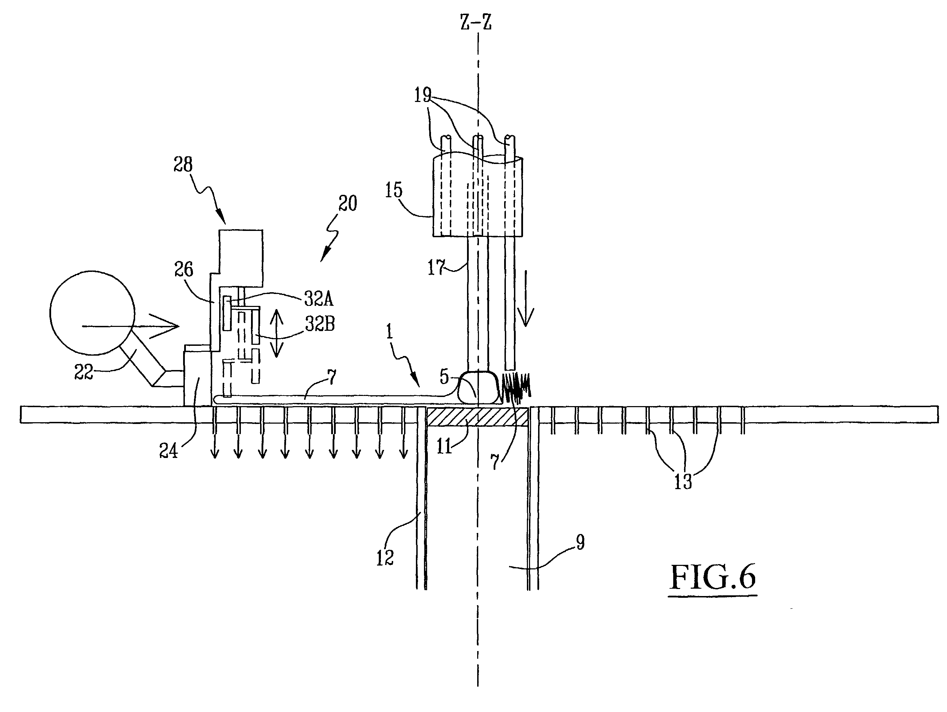

A la Figure 6, on a représenté l'automate 20 et ses différentes parties constitutives, à savoir le bras 22, l'organe de compactage 24 et l'équipage mobile de pressage 28, dans une position dégagée de l'enveloppe 7, symétrique par rapport à l'axe central Z-Z de celle occupée en début de la première phase élémentaire de compactage. Cette position de l'automate 20 est obtenue par rotation autour de l'axe central Z-Z du bras 22, après retrait radial du bras 22.

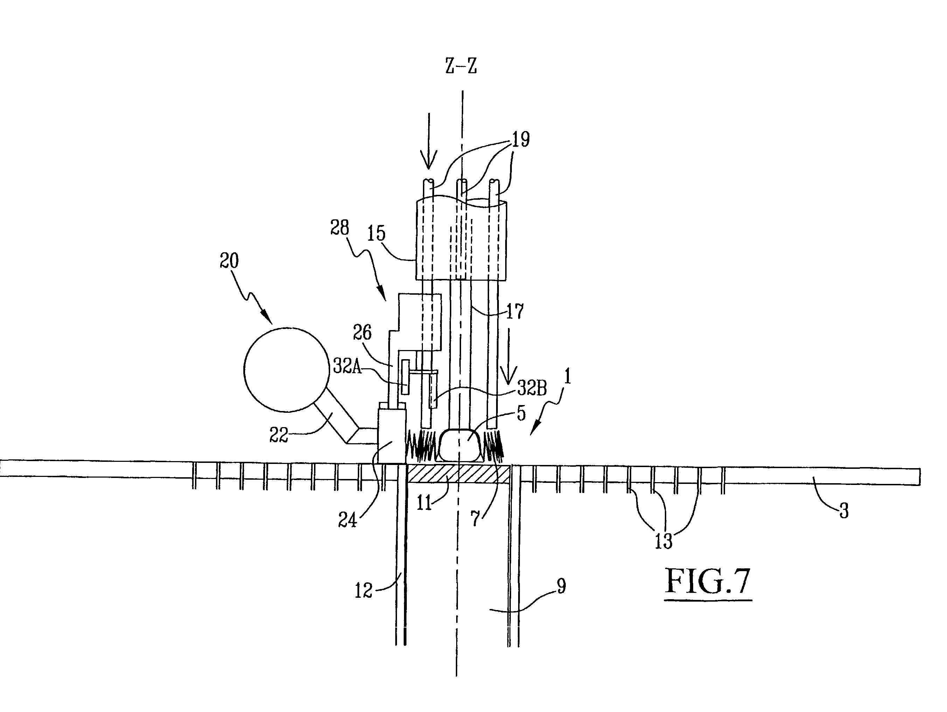

L'opération de compactage décrite précédemment pour la première phase élémentaire de compactage est reproduite, de même que la descente d'un piston de rétention 19 correspondant, jusqu'à l'obtention de la configuration représentée à la Figure 7.

On comprend aisément que le bras 22, et solidairement l'organe de compactage 24 et l'équipage mobile de pressage 28, peuvent prendre plusieurs positions angulaires autour de l'axe central Z-Z, de façon à réaliser une opération de compactage élémentaire à partir de points différents de l'enveloppe 7, répartis sur la périphérie du sac. On comprend également que le dispositif de pliage comporte une pluralité d'organes de rétention 19 correspondant chacun à une position angulaire du bras 22 autour de l'axe central Z-Z. Le nombre de pistons de rétention 19 est par conséquent, de préférence, égal au nombre de positions angulaires du bras 22.

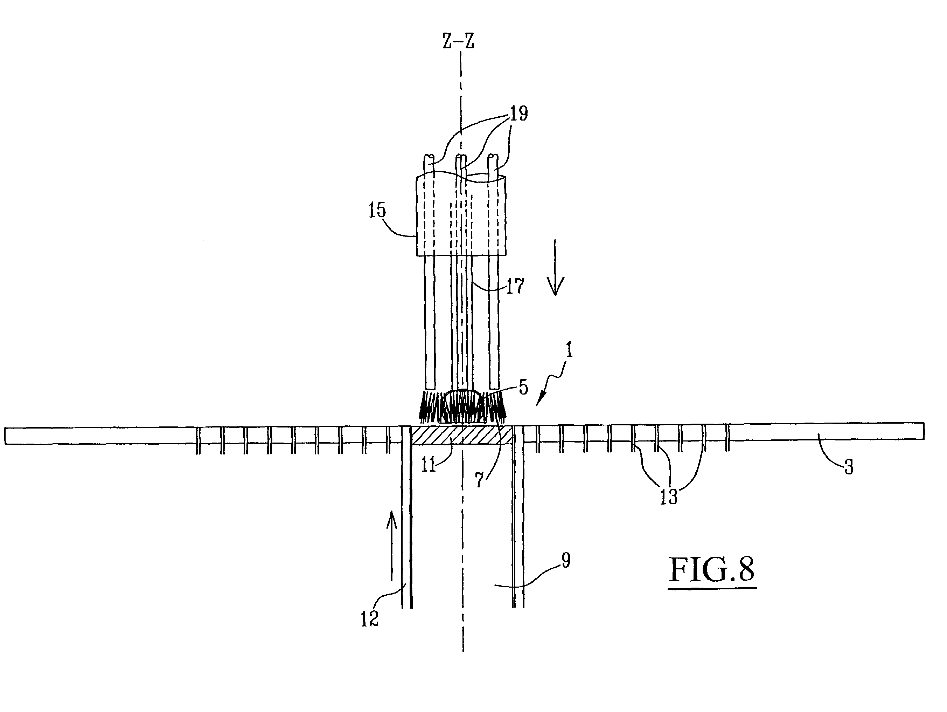

Lorsque le nombre de phases élémentaires de compactage nécessaire à un pliage satisfaisant du sac a été réalisé, le dispositif de compactage constitué du bras 22, de l'organe de compactage 24 et de l'équipage mobile de pressage 28, est dégagé pour sortir de l'encombrement défini par le piston d'expulsion 9 et le piston de compression 15. On se trouve alors dans la configuration représentée à la Figure 8.

A partir de cette configuration, on actionne les parois mobiles 12 vers le haut de façon à créer un espace de confinement du sac plié et figé en position par les pistons de rétention 19.

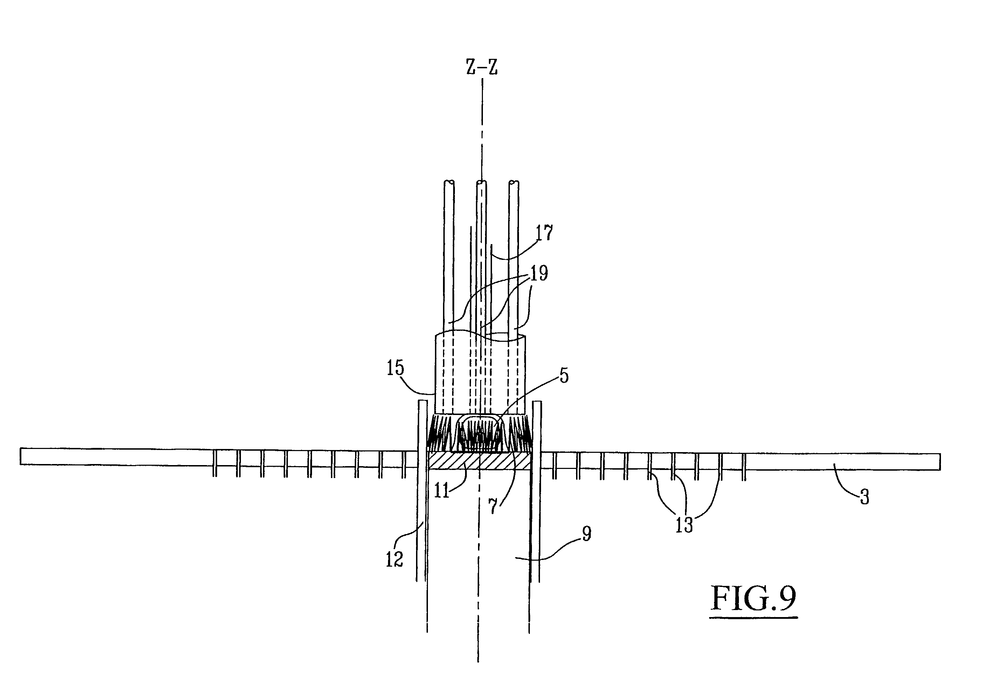

La Figure 9 illustre cette position obtenue en outre par l'actionnement vers le bas du piston de compression 15, jusqu'à ce que celui-ci vienne en pression sur le générateur 5 et l'enveloppe 7 pliée. Le sac est alors entièrement confiné dans un volume compris entre le plateau 11, les parois 12, et le piston de compression 15. Le piston de compression 15 peut éventuellement être animé d'un mouvement alternatif de translation verticale de façon à tasser les plis du sac. Le piston de compression 15 est ensuite retiré solidairement vers le haut avec le piston de maintien 17 et de rétention 19.

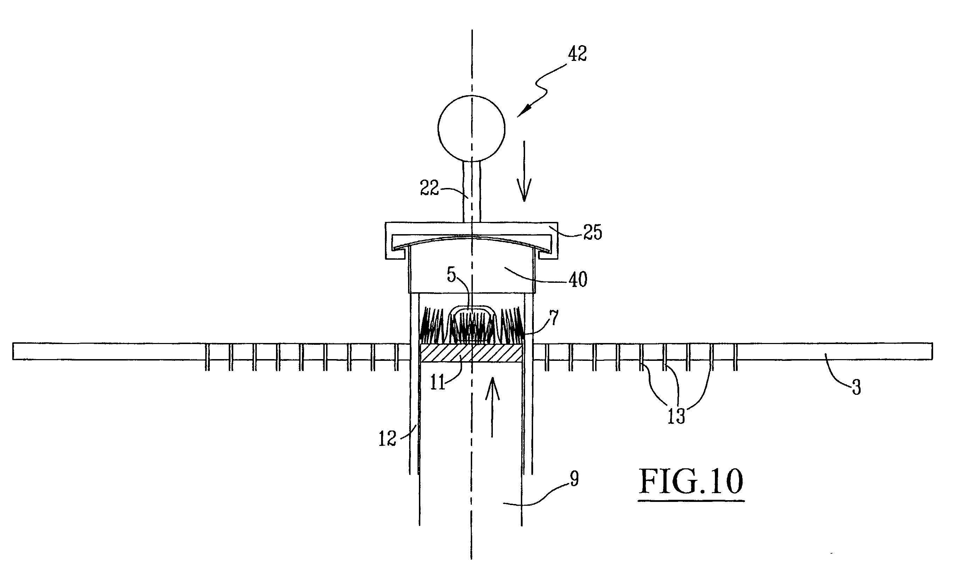

On amène ensuite, par le haut, de façon manuelle ou automatisée, un boîtier 40 destiné à recevoir le sac plié, tel que représenté à la Figure 10.

Le boîtier 40 présente un volume intérieur correspondant sensiblement au volume de confinement qui a été défini plus haut, et des parois coïncidant sensiblement avec les parois mobiles 12. Comme on le voit sur cette Figure 10, le boîtier 40 est, dans l'exemple représenté, amené en position d'attente au-dessus du sac plié par des moyens automatiques schématisés sous la référence 42. Les moyens 42 correspondent à l'automate 20, dont le bras 22 est équipé de l'organe de saisie 25, en lieu et place de l'organe de compactage 24. Comme indiqué par la flèche ascendante, il reste ensuite à déplacer le piston d'expulsion 9 vers le haut, jusqu'à introduire, en le pressant, le sac plié 1 à l'intérieur du boîtier 40. Les moyens automatiques 42 d'amenée du boîtier 40 sont alors actionnés pour extraire complètement le boîtier 40 équipé du sac plié 1 du dispositif de pliage, lequel reprend ensuite la position initiale représentée à la Figure 2.

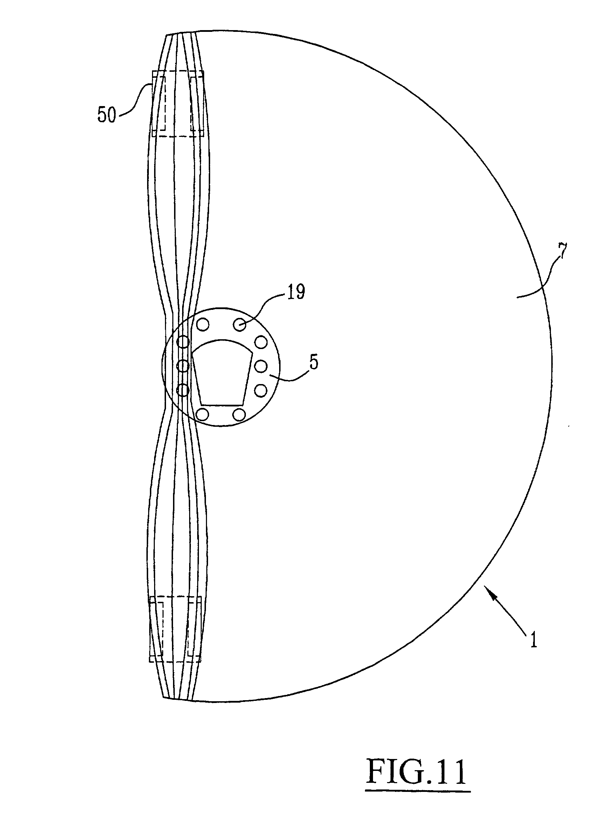

En référence aux Figures 11 à 13, qui représentent le sac en cours de pliage dans trois étapes successives, on va décrire des organes additionnels 50 et leur fonctionnement, étant donné qu'ils ne pouvaient être représentés sur les Figures précédentes, pour des raisons de clarté.

Ces organes additionnels sont constitués de pinces 50 prévues dans la table 3 pour passer d'une position escamotée dans celle-ci à une position en saillie, telle que représentée sur ces Figures 11 à 13.

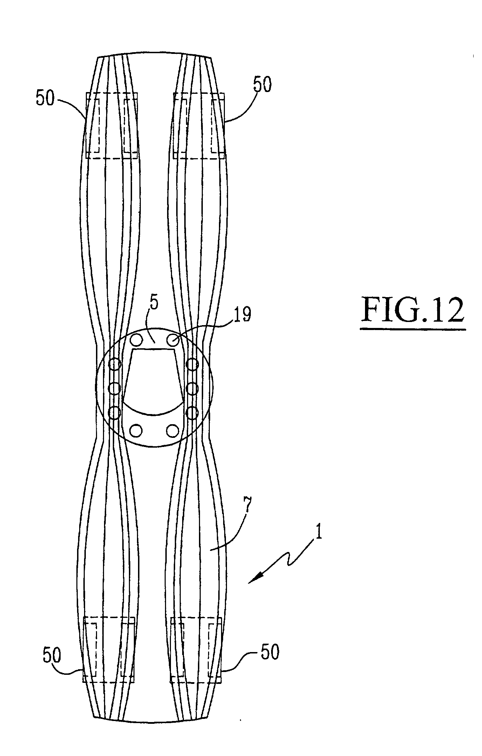

La Figure 11 représente le sac 1 partiellement plié suite aux opérations décrites jusqu'à la Figure 5. Le pliage obtenu est conservé par serrage des plis vers la périphérie du sac, au moyen des pinces 50. Le procédé de pliage se poursuit tel que décrit en référence aux Figures 6 et 7, jusqu'à la configuration représentée à la Figure 12, dans laquelle deux autres pinces de serrage 50 viennent à nouveau figer les plis obtenus.

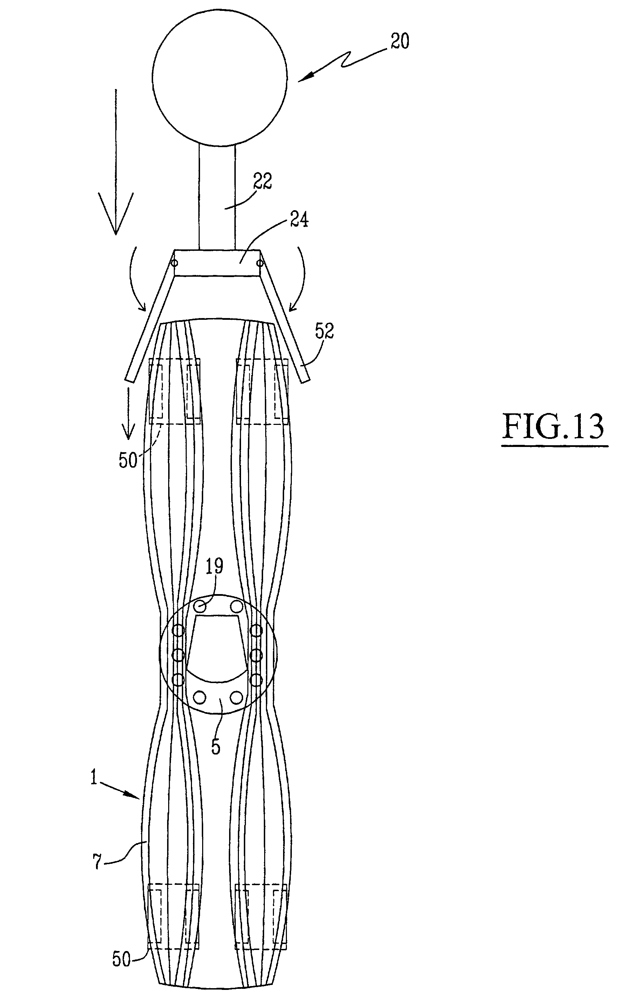

La Figure 13 montre une nouvelle phase de compactage, dans une direction décalée de 90° par rapport aux directions de compactage des opérations précédentes. La géométrie de l'organe de compactage 24 est changée en fonction de la forme du sac obtenue après les phases précédentes de compactage. En l'occurrence, deux bras latéraux mobiles 52 se resserrent angulairement vers l'axe de déplacement de l'organe de compactage 24, de façon à enserrer les plis périphériques du sac. L'organe de compactage 24 est alors déplacé vers le centre (comme indiqué par la flèche), de la même façon que cela a été décrit dans les phases précédentes. Les pinces 50 sont par exemple mobiles en translation par rapport à la table 3, de sorte que les pinces 50 situées du même côté du générateur de gaz 5 que l'organe de compactage 24, se déplacent solidairement avec celui-ci, lors de son mouvement de translation vers le générateur 5. Cette opération est répétée ensuite après rotation du bras 22 de l'organe de compactage 24 d'un angle de 180°.

A chaque fois, après la phase de compactage, et avant que l'organe de compactage 24 ne soit dégagé du sac, des pistons de rétention 19 respectifs sont amenés sur les plis ainsi formés, et les pinces 50 correspondantes sont escamotées dans la table 3.

On conçoit que les moyens électroniques programmables associés à l'automate 20 permettent de piloter les mouvements respectifs de l'organe de compactage 24, de ses bras latéraux mobiles 52, de l'équipage mobile 28 et de ses pistons 32A, 32B, de même que l'actionnement des pistons de rétention 19, en fonction des différentes phases du procédé. En particulier, l'actionnement des pistons de rétention 19 dépend de la position radiale de l'organe de compactage 24 dans la phase élémentaire de compactage correspondante.

Le dispositif et le procédé qui viennent d'être décrits en référence aux Figures permettent d'être adaptés à plusieurs types de sacs gonflables, à savoir différentes géométries d'enveloppes et différentes localisations du générateur du gaz par rapport à celle-ci, moyennant des modifications du programme de pilotage. Par conséquent, les outillages réalisés peuvent être hautement standardisés et nécessiter peu de réglage préalables à un changement de production. En effet, pour passer par exemple d'une production d'air-bags conducteurs à une production d'air-bags passagers, il suffit pour l'essentiel de changer de programme de pilotage de l'automate et éventuellement de remplacer l'organe de compactage 24. Dans l'état de la technique, au contraire, il était nécessaire, sinon de changer d'outillage, du moins d'en régler un grand nombre de parties constitutives.

L'invention permet d'atteindre les objectifs consistant à réaliser des pliages compacts et efficaces en terme de rapidité de déploiement, au moyen de machines automatiques offrant une grande standardisation et une grande souplesse de production.

## Revendications

1. Dispositif de pliage de sac gonflable pour dispositif de sécurité de véhicule automobile, comportant une table (3) sensiblement horizontale destinée à supporter un sac (1) vide étalé, un organe de maintien (17) mobile suivant un axe (Z-Z) sensiblement vertical, entre une position dégagée du sac située au-dessus de la table (3) et une position d'appui sur une partie du sac (5) définissant une partie fixe, et un organe de compactage (24) mobile suivant une direction parallèle à la table (3), radiale par rapport à ladite partie fixe (5), de façon à pouvoir réaliser une opération de compactage du sac (1) en se déplaçant d'un point périphérique du sac (1) vers la partie fixe (5), **caractérisé en ce qu'**il comporte en outre au moins un organe presseur (32A , 32B) lié en déplacement radial à l'organe de compactage (24), et mobile par rapport à celui-ci suivant un axe sensiblement vertical entre une position haute au-dessus de la table (3), et une position basse de pression sur le sac (1).

2. Dispositif de pliage suivant la revendication 1, **caractérisé en ce que** ledit organe presseur (32A, 32B) est mobile par rapport à l'organe de compactage (24) suivant un mouvement alternatif entre les positions haute et basse.

3. Dispositif de pliage suivant la revendication 1 ou 2, **caractérisé en ce que** ledit organe presseur (32A, 32B) est adapté pour être, dans sa position haute, dégagé du sac (1).

4. Dispositif de pliage suivant l'une quelconque des revendications 1 à 3, **caractérisé en ce qu'**il comporte deux tels organes presseurs (32A, 32B) décalés radialement.

5. Dispositif de pliage suivant la revendication 4, **caractérisé en ce que** lesdits organes presseurs (32A, 32B) sont adaptés pour être animés d'un mouvement relatif en translation l'un par rapport à l'autre, suivant leur axe de déplacement sensiblement vertical.

6. Dispositif de pliage suivant l'une quelconque des revendications 1 à 5, caractérisé en ce ledit organe de compactage (24) est monté mobile en rotation par rapport à la table (3) autour de l'axe de déplacement (Z-Z) de l'organe de maintien (17), de façon à pouvoir prendre successivement une pluralité de positions angulaires par rapport audit axe (Z-Z), correspondant à plusieurs opérations successives de compactage du sac (1), à partir de différents points périphériques du sac.

7. Dispositif de pliage suivant la revendication 6, **caractérisé en ce qu'**il comporte un unique organe de compactage (24) mobile radialement.

8. Dispositif de pliage suivant l'une quelconque des revendications 1 à 7, **caractérisé en ce qu'**il comporte au moins un organe de rétention (19) mobile suivant un axe sensiblement vertical entre une position dégagée du sac (1) située au-dessus de la table (3), et une position d'appui sur une partie du sac radialement extérieure par rapport à la partie fixe (5), définissant une partie de rétention.

9. Dispositif de pliage suivant la revendication 8, **caractérisé en ce qu'**il comporte des moyens électroniques programmables de contrôle et de commande de la position et du déplacement de l'organe de compactage (24) et de l'organe de rétention (19).

10. Dispositif de pliage suivant l'une quelconque des revendications 1 à 9, **caractérisé en ce que** la table (3) est pourvue de pinces (50) adaptées pour passer d'une position escamotée dans la table (3) à une position en saillie de serrage d'une partie de sac pliée.

11. Dispositif de pliage suivant la revendication 10, **caractérisé en ce que** lesdites pinces (50) sont mobiles en translation par rapport à la table (3), au moins partiellement solidairement avec l'organe de compactage (24).

12. Dispositif de pliage suivant l'une quelconque des revendications 1 à 11, **caractérisé en ce que** l'organe de compactage (24) est monté de façon amovible sur un bras d'automate (22).

13. Dispositif de pliage suivant la revendication 12, **caractérisé en ce que** ledit bras (22) est adapté pour recevoir un organe de saisie (25) destiné à placer une partie de boîtier (40) sur le sac plié.

14. Dispositif de pliage suivant l'une quelconque des revendications 1 à 13, **caractérisé en ce qu'**il comprend un poste de chauffage (3B) dans lequel sont disposés des moyens de chauffage (103) du sac.

15. Dispositif de pliage suivant la revendication 14, **caractérisé en ce que** la table (3) est susceptible de rotation autour d'un axe sensiblement vertical, de façon à prendre au moins deux positions angulaires par rapport audit axe, une position correspondant à la position du sac (1) dans le poste de chauffage (3B), et l'autre position correspondant à la position de la partie fixe (5) au droit de l'organe de maintien (17) et aux opérations de compactage.

16. Dispositif de pliage suivant la revendication 15, **caractérisé en ce que** la table (3) est susceptible de prendre une troisième position angulaire par rapport audit axe, correspondant à une position en libre accès (3A) qui permet à un opérateur (8) ou un robot de placer et fixer un sac (1) sur la table (3).

17. Dispositif de pliage suivant la revendication 16, **caractérisé en ce qu'**il comprend des moyens de commande de la rotation de la table (3), adaptés pour placer la table (3) successivement dans sa position de libre accès (3A), sa position de chauffage du sac (3B), et sa position de compactage du sac (3C).

18. Dispositif de pliage suivant l'une quelconque des revendications 1 à 17, **caractérisé en ce que** la table (3) est pourvue de moyens d'aspiration (13) adaptés pour exercer sur le sac (1) des efforts d'aspiration tendant à le plaquer localement sur la table (3).

19. Procédé de pliage d'un sac gonflable pour dispositif de sécurité de véhicule automobile, dans lequel on place le sac (1) vide étalé sur une table de support (3) sensiblement horizontale, on maintient le sac (1) plaqué sur la table (3) autour d'une partie fixe (5) en exerçant une pression sur ladite partie fixe (5) du sac, **caractérisé en ce qu'**on réalise ensuite la séquence d'opérations élémentaires successives suivante, au moins deux fois consécutivement, à partir de points périphériques différents du sac (1):
- on compacte le sac (1) en exerçant une pression radiale sensiblement horizontale vers la partie fixé (5), en un point périphérique du sac (1), au moyen d'un organe de compactage (24); et
- on maintient la partie de sac ainsi compactée en exerçant une pression sensiblement verticale, au moyen d'un organe de rétention (19), et **en ce que** durant l'opération élémentaire de compactage, on exerce une pression suivant un axe sensiblement vertical au moyen d'un organe presseur, qui est lié en déplacement radial à l'organe de compactage.

20. Procédé de pliage suivant la revendication 19, **caractérisé en ce qu'**entre deux opérations élémentaires successives, on déplace angulairement l'organe de compactage (24) par rapport à un axe sensiblement vertical (Z-Z) passant par la partie fixe (5).

21. Procédé de pliage suivant la revendication 19 ou 20, **caractérisé en ce que** durant l'opération élémentaire due compactage, on exerce des pressions alternatives suivant une direction sensiblement verticale sur la partie de sac en cours de compactage, de façon à former des plis.

22. Procédé de pliage suivant la revendication 21, **caractérisé en ce qu'**on exerce lesdites pressions alternatives en au moins deux régions de la partie de sac en cours de compactage, décalées radialement.

23. Procédé de pliage suivant l'une quelconque des revendications 19 à 22, **caractérisé en ce qu'**on crée une dépression entre le sac (1) et la table de support (3) par des moyens d'aspiration (13).

24. Procédé de pliage suivant l'une quelconque des revendications 19 à 23, **caractérisé en ce qu'**on réalise une opération de chauffage du sac, préalablement à la séquence d'opérations élémentaires.

25. Procédé de pliage suivant l'une quelconque des revendications 19 à 24, **caractérisé en ce qu'**on place une partie de boîtier (40) au-dessus du sac plié, et on presse le sac plié à l'intérieur du boîtier (40) au moyen d'un organe d'expulsion (9) à mouvement vertical ascendant.

## Patentansprüche

1. Vorrichtung zum Falten eines aufblasbaren Sackes für eine Automobilsicherheitsvorrichtung, welche einen im Wesentlichen horizontalen Tisch (3), der dazu bestimmt ist, einen ausgebreiteten leeren Sack (1) zu tragen, ein Halteorgan (17), welches entlang einer im Wesentlichen vertikalen Achse (Z-Z) beweglich ist, zwischen einer über dem Tisch (3) befindlichen, von dem Sack losgelösten Position und einer Andrückposition auf einem Teil des Sackes (5), der einen feststehenden Teil definiert, und ein Komprimierelement (24) aufweist, welches entlang einer sich parallel zu dem Tisch (3) und radial in Bezug auf besagten feststehenden Teil (5) erstreckenden Richtung beweglich ist, so dass es einen Komprimiervorgang des Sackes (1) verwirklichen kann, indem es sich von einem Randpunkt des Sackes (1) auf den feststehenden Teil (5) zu bewegt,
**dadurch gekennzeichnet,**
**dass** sie des weiteren mindestens ein Druckelement (32A, 32B) aufweist, welches mit dem Komprimierelement (24) radial versetzt verbunden ist und in Bezug auf dieses entlang einer im Wesentlichen vertikalen Achse beweglich ist zwischen einer oberen Position über dem Tisch (3) und einer unteren Position, in der es Druck auf den Sack (1) ausübt.

2. Faltvorrichtung nach Anspruch 1,
**dadurch gekennzeichnet,**
**dass** das Druckelement (32A, 32B) in Bezug auf das Komprimierelement (24) einer Wechselbewegung zwischen der oberen und der unteren Position folgend beweglich ist.

3. Faltvorrichtung nach Anspruch 1 oder 2,
**dadurch gekennzeichnet,**
**dass** das Druckelement (32A, 32B) so ausgeführt ist, dass es in seiner oberen Position von dem Sack (1) gelöst ist.

4. Faltvorrichtung nach einem der Ansprüche 1 bis 3,
**dadurch gekennzeichnet,**
**dass** sie zwei radial zueinander versetzte Druckelemente (32A, 32B) aufweist,

5. Faltvorrichtung nach Anspruch 4,
**dadurch gekennzeichnet,**
**dass** die Druckelemente (32A, 32B) geeignet sind, eine translatorische Relativbewegung zueinander entlang ihrer im Wesentlichen vertikalen Verschiebeachse durchzuführen.

6. Faltvorrichtung nach einem der Ansprüche 1 bis 5,
**dadurch gekennzeichnet,**
**dass** das Komprimierelement (24) in Bezug auf den Tisch (3) um die Verschiebeachse (Z-Z) des Halteorgans (17) drehbar angebracht ist, so dass es der Reihe nach eine Vielzahl von Winkelpositionen in Bezug auf diese Achse (Z-Z) einnehmen kann, welche mehreren aufeinander folgenden Komprimiervorgängen des Sackes (1) entsprechen, ausgehend von verschiedenen Randpunkten des Sackes.

7. Faltvorrichtung nach Anspruch 6,
**dadurch gekennzeichnet,**
**dass** sie ein einziges Komprimierelement (24) aufweist, welches radial beweglich ist.

8. Faltvorrichtung nach einem der Ansprüche 1 bis 7,
**dadurch gekennzeichnet,**
**dass** sie mindestens ein Rückhalteelement (19) aufweist, welches entlang einer im Wesentlichen vertikalen Achse beweglich ist zwischen einer vom Sack (1) losgelösten Position über dem Tisch (3) und einer Andruckposition auf einem Teil des Sackes, der radial außerhalb des festen Teils (5) liegt und einen Halteabschnitt definiert.

9. Faltvorrichtung nach Anspruch 8,
**dadurch gekennzeichnet,**
**dass** sie elektronische programmierbare Überwachungs- und Steuermittel für die Position und die Bewegung des Komprimierelements (24) und des Rückhalteelements (19) aufweist.

10. Faltvorrichtung nach einem der Ansprüche 1 bis 9,
**dadurch gekennzeichnet,**
**dass** der Tisch (3) mit Klammern (50) versehen ist, welche geeignet sind, um von einer in den Tisch (3) versenkten Position in eine vorspringende Position zum Einklemmen eines Teils des gefalteten Sackes überzugehen.

11. Faltvorrichtung nach Anspruch 10,
**dadurch gekennzeichnet,**
**dass** die Klammern (50) in Bezug auf den Tisch (3) verschiebbar sind, zumindest teilweise zusammen mit dem Komprimierelement (24).

12. Faltvorrichtung nach einem der Ansprüche 1 bis 11,
**dadurch gekennzeichnet,**
**dass** das Komprimierelement (24) lösbar auf einem Automatenarm (22) montiert ist.

13. Faltvorrichtung nach Anspruch 12,
**dadurch gekennzeichnet,**
**dass** der Arm (22) geeignet ist, um ein Greifelement (25) aufzunehmen, welches dazu bestimmt ist, einen Teil eines Gehäuses (40) auf den gefalteten Sack zu legen.

14. Faltvorrichtung nach einem der Ansprüche 1 bis 13,
**dadurch gekennzeichnet,**
**dass** sie eine Heizstation (3B) aufweist, in der Mittel zum Heizen (103) des Sackes angebracht sind.

15. Faltvorrichtung nach Anspruch 14,
**dadurch gekennzeichnet,**
**dass** der Tisch (3) um eine im Wesentlichen vertikale Achse so drehbar ist, dass er mindestens zwei Winkelpositionen in Bezug auf diese Achse einnehmen kann, wobei eine Position der Position des Sackes (1) in der Heizstation (3B), und die andere Position den Komprimiervorgängen sowie der Position des feststehenden Teils (5) in gerade Linie mit dem Halteelement (17) entspricht.

16. Faltvorrichtung nach Anspruch 15,
**dadurch gekennzeichnet,**
**dass** der Tisch (3) eine dritte Winkelposition in Bezug auf die Achse einnehmen kann, welche einer frei zugänglichen Position (3A) entspricht, die es einem Bediener (8) oder einem Roboter erlaubt, einen Sack (1) auf dem Tisch (3) zu platzieren und zu befestigen.

17. Faltvorrichtung nach Anspruch 16,
**dadurch gekennzeichnet,**
**dass** sie Mittel zum Steuern der Drehung des Tisches (3) aufweist, welche geeignet sind, den Tisch (3) der Reihe nach in seine frei zugängliche Position (3A), seine Position zum Heizen des Sackes (3B) und seine Position zum Komprimieren des Sackes (3C) zu positionieren.

18. Faltvorrichtung nach einem der Ansprüche 1 bis 17,
**dadurch gekennzeichnet,**
**dass** der Tisch mit Ansaugmitteln (13) versehen ist, welche geeignet sind, auf den Sack (1) Ansaugkräfte auszuüben, welche danach streben, ihn lokal auf den Tisch (3) zu drücken.

19. Verfahren zum Falten eines aufblasbaren Sackes für eine Automobilsicherheitsvorrichtung, bei dem der Sack (1) leer ausgebreitet auf einen im Wesentlichen horizontalen Haltetisch (3) gelegt wird, der um einen feststehenden Teil (5) herum auf den Tisch (3) angedrückte Sack (1) gehalten wird, wobei Druck auf diesen feststehenden Teil (5) des Sackes ausgeübt wird,
**dadurch gekennzeichnet,**
**dass** danach, ausgehend von verschiedenen Randpunkten des Sackes (1) die folgende Sequenz von elementaren aufeinander folgenden Verfahrensschritten mindestens zweimal nacheinander durchgeführt wird:
- der Sack (1) wird unter Ausübung eines radialen, im Wesentlichen horizontalen Drucks in Richtung des feststehenden Teils (5) an einem Randpunkt des Sackes (1) mit Hilfe eines Kornprimierelements (24) komprimiert; und
- der auf diese Weise komprimierte Teil des Sackes wird gehalten, indem ein im Wesentlichen vertikaler Druck mit Hilfe eines Rückhalteelements (19) ausgeübt wird, und dass während des elementaren Verfahrensschritts der Kompression ein Druck entlang einer im Wesentlichen vertikalen Achse mit Hilfe eines Druckelements ausgeübt wird, das mit dem Komprimierelement radial versetzt verbunden ist.

20. Faltverfahren nach Anspruch 19,
**dadurch gekennzeichnet,**
**dass** zwischen zwei aufeinander folgenden elementaren Verfahrensschritten die Winkelposition des Komprimierelements (24) geändert wird in Bezug auf eine im Wesentlichen vertikale Achse (Z-Z), welche durch den feststehenden Teil (5) verläuft.

21. Faltverfahren nach Anspruch 19 oder 20,
**dadurch gekennzeichnet,**
**dass** während des elementaren Verfahrensschritts der Komprimierung abwechselnde Drücke entlang einer im Wesentlichen vertikalen Richtung auf den Teil des Sackes, der gerade komprimiert wird, ausgeübt werden, so dass Falten gebildet werden.

22. Faltverfahren nach Anspruch 21,
**dadurch gekennzeichnet,**
**dass** die abwechselnden Drücke in zumindest zwei radial zueinander versetzten Regionen des Teils des Sackes, der gerade komprimiert wird, ausgeübt werden.

23. Faltverfahren nach einem der Ansprüche 19 bis 22,
**dadurch gekennzeichnet,**
**dass** zwischen dem Sack (1) und dem Haltetisch (3) durch Ansaugmittel (13) ein Unterdruck erzeugt wird.

24. Faltverfahren nach einem der Ansprüche 19 bis 23,
**dadurch gekennzeichnet,**
**dass** vor der Sequenz der elementaren Verfahrensschritte ein Verfahrensschritt zum Heizen des Sackes durchgeführt wird.

25. Faltverfahren nach einem der Ansprüche 19 bis 24,
**dadurch gekennzeichnet,**
**dass** ein Teil eines Gehäuses (40) auf den gefalteten Sack gesetzt wird und dass der gefaltete Sack mit Hilfe eines Ausstoßelements (9), welches vertikal nach oben beweglich ist, in das Innere des Gehäuses (40) gepresst wird.

## Claims

1. Device for folding an airbag for a motor vehicle safety device, comprising a substantially horizontal table (3) to support an empty airbag (1) which is spread out, a maintaining member (17) movable along a substantially vertical axis (Z-Z), between a position of release of the airbag located over the table (3) and a position of support on one part of the airbag (5) defining a fixed part, and a compacting member (24) movable in a direction parallel to the table (3), radial relative to said fixed part (5), so as to be able to carry out a compacting operation of the airbag (1) by displacing it from a peripheral point on the airbag (1) toward the fixed part (5), **characterised in that** it further comprises at least one pressing member (32A, 32B) connected in radial displacement to the compacting member (24) and movable relative thereto along a substantially vertical axis between an upper position over the table (3) and a lower position of pressure on the airbag (1).

2. Device for folding according to claim 1, **Characterised in that** said pressing member (32A, 32B) is movable relative to the compacting member (24) with an alternate movement between the upper and lower positions.

3. Device for folding according to claim 1 or 2, **characterised in that** said pressing member (32A, 32B), in its upper position, is adapted to be released from the airbag (1).

4. Device for folding according to any of claims 1 to 3, **characterised in that** it comprises two such pressing members (32A, 32B) radially offset.

5. Device for folding according to claim 4, **characterised in that** said pressing members (32A, 32B) are adapted to be actuated by a relative movement in translation with respect to one another, along their substantially vertical axis of displacement.

6. Device for folding according to any of claims 1 to 5, **characterised in that** said compacting member (24) is mounted movable in rotation relative to the table (3) about the axis of displacement (Z-Z) of the maintaining member (17), so as to be able successively to adopt a plurality of angular positions relative to said axis (Z-Z), corresponding to a plurality of successive operations to compact the airbag (1) from different peripheral points on the bag.

7. Device for folding according to claim 6, **characterised in that** it comprises a single radially movable compacting member (24).

8. Device for folding according to any of claims 1 to 7, **characterised in that** it comprises at least one retaining member (19) movable along a substantially vertical axis between a position of release of the airbag (1) situated over the table (3) and a position of support on one radially external part of the airbag relative to the fixed part (5), defining a retaining part.

9. Device for folding according to claim 8, **characterised in that** it comprises programmable electronic control and command means for the positioning and displacement of the compacting member (24) and the retaining member (19).

10. Device for folding according to any of claims 1 to 9, **characterised in that** the table (3) is provided with clips (50) adapted to pass from a retracted position in the table (3) to a protruding position for clamping one part of the folded airbag.

11. Device for folding according to claim 10, **characterised in that** said clips (50) are movable in translation relative to the table (3) at least partially interdependently with the compacting member (24).

12. Device for folding according to any of claims 1 to 11, **characterised in that** the compacting member (24) is mounted in a removable manner on a control arm (22).

13. Device for folding according to claim 12, **characterised in that** said arm (22) is adapted to receive a gripping member (25) to place one part of the housing (40) on the folded airbag.

14. Device for folding according to any of claims 1 to 13, **characterised in that** it comprises a heating point (3B) in which means (103) for heating the airbag are arranged.

15. Device for folding according to claim 14, **characterised in that** the table (3) is capable of rotating about a substantially vertical axis, so as to adopt at least two angular positions relative to said axis, one position corresponding to the position of the airbag (1) in the heating point (3B) and the other position corresponding to the position of the fixed part (5) to the right of the maintaining member (17) and to the compacting operations.

16. Device for folding according to claim 15, **characterised in that** the table (3) is capable of adopting a third angular position relative to said axis, corresponding to a position of free access (3A) which allows an operator (8) or a robot to place and fix an airbag (1) on the table (3).

17. Device for folding according to claim 16, **characterised in that** it comprises command means for rotating the table (3), adapted to place the table (3) successively in its position of free access (3A), its position for heating the airbag (3B) and its position for compacting the airbag (3C).

18. Device for folding according to any of claims 1 to 17, **characterised in that** the table (3) is provided with suction means (13) adapted to exert suction forces on the airbag (1) tending to flatten it in places on the table (3).

19. Method for folding an airbag for a motor vehicle safety device, in which the empty airbag (1) which is spread out is placed on a substantially horizontal support table (3) and the airbag (1) is held flattened on the table (3) around a fixed part (5) by exerting pressure on said fixed part (5) of the airbag, **characterised in that** subsequently the following sequence of successive basic operations is carried out at least twice consecutively, from different peripheral points on the airbag (1);
- the airbag (1) is compacted by exerting a substantially horizontal radial pressure toward the fixed part (5), at a peripheral point on the airbag (1), by means of a compacting member (24); and
- the part of the bag thus compacted is held by exerting a substantially vertical pressure, by means of a retaining member (19), and **in that** during the basic compacting operation, pressure is exerted along a substantially vertical axis by means of a pressing member which is connected in radial displacement to the compacting member.

20. Method for folding according to claim 19, **characterised in that** between two successive basic operations, the compacting member (24) is angularly displaced relative to a substantially vertical axis (Z-Z) passing through the fixed part (5).

21. Method for folding according to claim 19 or 20, **characterised in that** during the basic compacting operation, alternate pressures are exerted in a substantially vertical direction on the part of the airbag during compacting, so as to form folds.

22. Method for folding according to claim 21, **characterised in that** said alternate pressures are exerted in at least two radially offset regions of the part of the airbag during compacting.

23. Method for folding according to any of claims 19 to 22, **characterised in that** a negative pressure is created between the airbag (1) and the support table (3) by suction means (13).

24. Method for folding according to any of claims 19 to 23, **characterised in that** an operation for heating the airbag is carried out prior to the sequence of basic operations.

25. Method for folding according to any of claims 19 to 24, **characterised in that** one part of the housing (40) is placed over the folded airbag and the folded airbag is pressed toward the interior of the housing (40) by means of an expelling member (9) with an upwardly vertical movement.
